**Europäisches Patentamt**

**European Patent Office**

**Office européen des brevets**

(19)

(11) Numéro de publication : **0 653 469 A2**

(12)

# DEMANDE DE BREVET EUROPEEN

(21) Numéro de dépôt : **94402369.6**

(22) Date de dépôt : **21.10.94**

(51) Int. Cl.⁶ : **C09D 133/04,** C09D 151/06, C09D 201/00, C09J 201/00

(30) Priorité : 06.12.93 US 162556
15.11.93 US 152618

(43) Date de publication de la demande :
**17.05.95 Bulletin 95/20**

(84) Etats contractants désignés :
**AT BE CH DE DK ES FR GB GR IE IT LI LU NL PT SE**

(71) Demandeur : **RHONE-POULENC SPECIALTY CHEMICALS CO.**
**Prospect Plains Road,**
**CN 7500**
**Cranbury, NJ 08512-7500 (US)**

(72) Inventeur : **Hirsh, Marc Stephen**
**746 W. Foothill Road**
**Bridgewater, NJ 08807 (US)**
Inventeur : **Lee, Sharon**
**808 Rivendell Way**
**Edison, NJ 08817 (US)**
Inventeur : **Say, Terence E.**
**19 Nikol Drive**
**Richboro, Pennsylvania 18954 (US)**
Inventeur : **Zeszotarski, Jonathan C.**
**30-7 Florence Tollgate**
**Florence, NJ 08518 (US)**

(74) Mandataire : **Seugnet, Jean Louis et al**
**RHONE-POULENC CHIMIE,**
**Direction de la Propriété Industrielle,**
**25, Quai Paul Doumer**
**F-92408 Courbevoie Cédex (FR)**

(54) **Compositions aqueuses de revêtement à base de latex réticulant notamment à température ambiante.**

(57) la composition aqueuse de revêtement selon l'invention est à base de latex d'un polymère dérivant de la polymérisation des monomères suivants :
(a) acétoacétoxyéthyl acrylate ou acétoacétoxyéthyl méthacrylate ;
(b) glycidyl acrylate ou glycidyl méthacrylate ;
(c) un ou plusieurs acides polymérisables à insaturation éthylénique et
(d) un ou plusieurs monomères copolymérisables avec les précédents ;
dans lequel le pourcentage total en poids de (a), (b) et (c) dans la composition de latex polymère est compris entre environ 2 % en poids et environ 60 % en poids par rapport à la quantité totale de solides contenus dans le latex et dans lequel le pourcentage total en poids de (d) dans la composition du latex est compris entre environ 97 % en poids et environ 40 % en poids par rapport à la quantité totale de solides polymères contenus dans le latex.

Les compositions aqueuses selon l'invention sont utilisables notamment dans les colles, les compositions adhésives sensibles à la pression, les peintures industrielles, les peintures décoratives et les revêtements pour bois.

**EP 0 653 469 A2**

## Domaine technique de l'invention

La présente invention appartient au domaine des compositions aqueuses de revêtement, utilisées par exemple comme peintures à l'eau et qui réticulent à la température ambiante et à des températures élevées.

Les compositions de revêtement qui réticulent dans les conditions ambiantes sont connues depuis longtemps. Les compositions les plus anciennes de ce type sont les revêtements à base d'huiles siccatives qui réticulent par oxydation à l'air. Les autres compositions de revêtement mises au point plus récemment sont les compositions qui reposent sur les réactions entre l'époxyde et l'acide carboxylique, l'isocyanate et l'humidité, la polyaziridine et l'acide carboxylique, le méthylène activé et l'acide acrylique insaturé.

Le brevet US-A 3 554 987 décrit des copolymères filmogènes de l'acide acrylique, de l'acétoacétoxyéthylméthacrylate et des monomères avec lesquels ils sont copolymérisés.

Selon le brevet US-A 4 408 018 on mélange des polymères comportant des groupements pendants acétoacétate avec des polyacrylates comportant plus d'un groupement acrylique non saturé et on les réticule par addition de Michael en utilisant une base forte comme catalyseur.

La demande de brevet européen EP-A 227 454 décrit aussi une réticulation obtenue par addition de Michael. Dans cette demande de brevet, on mélange des composés contenant un grand nombre de groupes acétoacétate libres avec des composés contenant un grand nombre de groupes acryliques à insaturation éthylénique et on les réticule par addition d'une base forte ou d'un composé organométallique.

Le brevet Sud-Africain n° 85-2044 décrit des compositions de revêtement qui réticulent aux températures ambiantes et qui sont obtenues à partir d'une composition contenant un grand nombre de groupes méthylène activés et de groupes carbonyle à insaturation éthylénique.

Dans l'article de A. Noomen, intitulé "Ambient Temperature Curable Coatings Based on Two-Pack Binders", Organic Coatings Conference, Athènes, Grèce, juin 1987, la discussion porte sur des compositions de revêtement qui réticulent dans le cadre d'une réaction d'addition de Michael entre des groupes acétoacétate-cétimine et des groupes acrylique-malonate.

Dans les brevets US-A 3 305 601 et US-A 4 028 294 et la demande de brevet européen EP-A 226 171, on décrit des compositions de revêtements thermodurcissables qui reposent sur la réaction entre l'époxyde et l'acide carboxylique.

Le brevet US-A 4 906 684 porte sur des compositions polymères qui réticulent à la température ambiante et qui contient de l'acétoacétoéthyl-(méth)acrylate, du glycidyl-(méth)acrylate, un acide polymérisable et un monomère copolymérisable. Appliqué comme revêtement sur un substrat, ledit revêtement réticule et durcit aux températures ambiantes. Ces compositions sont vendues par Rhône-Poulenc Inc. sous la marque : résine AMBICURE®.

Etant donné la demande toujours plus importante de revêtement décoratifs et protecteurs pouvant supporter un grand nombre d'applications et résister à toutes sortes de conditions imposées par l'environnement, il existe en permanence un besoin de nouvelles compositions.

## Exposé de l'invention

La présente invention concerne des compositions aqueuses de revêtement à base de latex (polymère en dispersion dans l'eau) qui réticulent à la température ambiante et à des températures élevées. D'un côté, la présente invention appartient au domaine des compositions de revêtement qui contiennent un groupe acétoacétoxy, un groupe glycidyle et un groupe acide carboxylique. D'un autre côté, la présente invention s'apparente aux polymères acryliques filmogènes qui comportent des groupes acétoacétoxy libres, des groupes glycidyle et des groupes acide carboxylique.

Les compositions aqueuses de revêtement selon la présente invention sont à base d'un latex polymère qui contient
(a) de l'acétoacétoxyacrylate d'éthyle ou méthacrylate,
(b) du glycidylacrylate ou méthacrylate,
(c) un acide polymérisable à insaturation éthylénique et
(d) un monomère pouvant copolymériser avec les monomères précédents,
et dans lequel le pourcentage total en poids de (a), (b) et (c) contenu dans le polymère est compris entre au moins environ 2 % et au plus environ 60 % en poids de la quantité totale de polymères solides contenus dans le latex dans lequel (d) est présent à raison d'environ 40 à environ 97 % en poids par rapport à la quantité totale de polymères solides contenus dans le latex et dans lequel le pH de la dispersion se situe entre environ 6,5 et environ 10.

Appliqué sur un substrat, la composition aqueuse de revêtement réticule à la température ambiante jusqu'à thermodurcissement complet. On utilise cette composition aqueuse de revêtement comme liant, de préférence, en particulier, dans les peintures à l'eau.

## *Description des modes de réalisation préférentiels*

Le composant (a), l'acétoacétoxyacrylate d'éthyle ou méthacrylate monomères mis en oeuvre selon la présente invention, peuvent être obtenus par réaction entre le dicétène et l'hydroxyacrylate d'éthyle ou méthacrylate. Le groupe acétoacétoxyéthyle comporte un groupe méthylène situé entre les deux carbonyles et c'est en raison de cette position que l'on dit qu'il s'agit d'un groupe méthylène "actif". Grâce à leurs doubles liaisons, ces groupes sont capables d'addition de Michael et peuvent réagir avec les groupes époxyde. Dans le mode de réalisation préférentiel, la quantité de ce composant présent dans la dispersion aqueuse varie entre environ 0,5 et environ 20 % en poids.

Le composant (b), à savoir le glycidylacrylate ou méthacrylate monomères, mis en oeuvre selon la présente invention sont des monomères bien connus que l'on trouve dans le commerce. Ces monomères peuvent être obtenus par estérification de l'acide acrylique ou méthacrylique avec le glycidol ou l'épichlorohydrine, suivie d'une deshydrohalogénation. Le groupe glycidyle est en mesure de réagir avec des groupes méthylène actifs, avec des groupes acide carboxylique et avec d'autres groupes époxyde. Dans le mode de réalisation préférentiel, la quantité de ce composant présent dans la dispersion aqueuse varie entre environ 1,0 et environ 15,0 % en poids.

Le composant (c) comprend des monomères acides polymérisables qui sont des acides mono ou polycarboxyliques bien connus comportant une liaison polymérisable par molécule. Ces acides comportent en règle générale de 3 à environ 24 atomes de carbone et 1 ou 2 groupes acide carboxylique par molécule. Comme exemples de ces acides on peut citer les acides acrylique, méthacrylique, maléique, fumarique, itaconique, éthacrylique, crotonique, citraconique et les semi-esters des acides dicarboxyliques dans lesquels le groupe alcool estérifié contient de 1 à environ 20 atomes de carbone. Comme exemples de semi-esters appropriés on citera le méthylhydrogénofumarate, le benzylhydrogénomaléate, le butylhydrogéno-maléate, l'octylhydrogéno-itaconate, le dodécylhydrogéno-citraconate et autres similaires. Les acides préférentiels que l'on met en oeuvre selon la présente invention sont les acides acrylique et méthacrylique. Dans le mode de réalisation préférentiel, la quantité de ce composant présent dans la dispersion aqueuse varie entre environ 0,5 et environ 3,0 % en poids.

Le composant (d) comprend des monomères copolymérisables qui, selon la présente invention, peuvent être mis en oeuvre conjointement avec les trois autres familles de monomères indiquées ci-dessus. Il s'agit de n'importe lequel de ces monomères bien connus qui comportent un seul groupe polymérisable à insaturation éthylénique par molécule et qui peuvent être copolymérisés avec les autres monomères. La quantité de ce composant contenu dans la dispersion varie entre environ 40 et environ 97 % par rapport aux polymères solides, la quantité préférentielle étant comprise plus particulièrement entre environ 60 et environ 90 % en poids. Tout monomère en mesure de copolymériser avec les composants (a), (b) et (c) peut être mis en oeuvre selon la présente invention. Il s'agit des monomères qui ne comportent pas de groupes susceptibles, dans les conditions de la polymérisation. de réagir avec les groupes acétoacétoxy, glycidyle ou acide carboxylique.

Les types et les quantités de monomères copolymérisables mis en oeuvre selon la présente invention varient en fonction de l'application finale particulière à laquelle est destiné le produit selon la présente invention. Ces variations sont bien connues et peuvent être facilement déterminées par l'homme du métier. Les comonomères mis en oeuvre de préférence selon la présente invention sont les esters d'acrylate et de méthacrylate dans lesquels le groupe ester est un groupe alkyle contenant de 1 à 8 atomes de carbone.

Comme exemples de tels monomères on peut citer les esters acryliques et méthacryliques dans lesquels le groupe ester contient de 1 à environ 20 atomes de carbone, tels que, par exemple, l'acrylate de méthyle, le méthacrylate de méthyle, l'acrylate d'éthyle, le méthacrylate d'éthyle, l'acrylate de propyle, l'acrylate de butyle, le méthacrylate de 2-éthylhexyle, l'acrylate de décyle, le méthacrylate de lauryle, le benzylacrylate et autres similaires.

Les autres esters acryliques ou méthacryliques qui peuvent être mis en oeuvre selon la présente invention sont des acrylates ou méthacrylates multifonctionnels, tels que, par exemple, l'éthylèneglycol diméthacrylate, l'hexanediol diacrylate, etc. Ces esters peuvent être mis en oeuvre en quantités pouvant aller jusqu'à environ 5 % en poids par rapport au poids total des monomères.

Les autres monomères copolymérisables sont les monomères aromatiques vinyliques, tels que le styrène, le vinyltoluène, l'alpha-méthylstyrène et autres similaires ainsi que les nitriles, tels que, par exemple, l'acrylonitrile et l'acrylamide.

Les monomères copolymérisables supplémentaires que l'on peut mettre en oeuvre selon la présente invention sont les dérivés de l'hypothétique alcool vinylique, par exemple, les esters vinyliques aliphatiques, tels que le formate de vinyle, l'acétate de vinyle, le propionate de vinyle, le butyrate de vinyle, l'ester vinylique de l'acide versatique et autres similaires.

Les compositions selon la présente invention sont obtenues par polymérisation de monomères émulsifiés dans l'eau selon des procédés de polymérisation en émulsion classiques. Ces procédés peuvent se faire en continu, par lots, par étapes ou en discontinu.

Les tensio-actifs mis en oeuvre pour émulsifier les monomères sont les tensio-actifs anioniques et non-ioniques ainsi que leurs mélanges.

Comme exemples de tensio-actifs anioniques pouvant être utilisés on peut citer les organosulfates et sulfonates, par exemple, les alkyl, aryl et alkaryl sulfates et sulfonates de sodium et de potassium, tels que le 2-éthylhexyl-sulfate de sodium, le 2-éthylhexyl-sulfate de potassium, le nonylsulfate de sodium, le laurylsulfate de sodium, le méthylbenzènesulfonate de potassium, le toluènesulfonate de potassium et le xylènesulfonate de sodium ; les alcools gras supérieurs, par exemple, le stéaryle, le lauryle, etc., éthoxylés et sulfonatés ; les dialkyl esters de sels de l'acide sulfosuccinique de métaux alcalins, tels que le diamyl sulfosuccinate de sodium et le dioctyl sulfosuccinate de sodium ; les produits de condensation de l'acide formaldéhyde-naphtalène sulfonique ; les sels de métaux alcalins, les sels partiels de métaux alcalins et les acides libres de phosphate esters organiques complexes.

Comme exemples de tensio-actifs non-ioniques pouvant être mis en oeuvre selon la présente invention on peut citer les polyéthers, tels que les condensats des oxydes d'éthylène et de propylène qui comprennent des éthers et thioéthers d'alkyl et d'alkaryl polyéthylèneglycol et polypropylène-glycol à chaînes linéaires ou ramifiées ; les alkylphénoxypoly(éthylèneoxy)-éthanols comportant des groupes alkyle contenant d'environ 7 à environ 18 atomes de carbone et comportant d'environ 4 à environ 240 motifs éthylèneoxy, tels que les heptylphénoxy-poly(éthylèneoxy)éthanols, les nonylphénoxy-poly(éthylèneoxy)éthanols ; les dérivés polyoxyalkylène de l'hexitol (y compris les sorbitans, sorbides, mannitans et mannides) ; les esters d'acides gras partiels à longues chaînes, tels que les dérivés polyoxyalkylène de sorbitan monolaurate, sorbitan monopalmitate, sorbitan monostéarate, sorbitan tristéarate, sorbitan monooléate et sorbitan trioléate ; les condensats de l'oxyde d'éthylène avec une base hydrophobe, ladite base étant obtenue par condensation de l'oxyde de propylène avec du propylène glycol ; les condensats contenant du sulfure, par exemple, ceux obtenus par condensation de l'oxyde d'éthylène avec des alkyl mercaptans supérieurs, tels que les nonyl, dodécyl ou tétradécyl mercaptans ou avec des alkylthiophénols dans lequels le groupe alkyle contient d'environ 6 à environ 15 atomes de carbone ; les dérivés oxyde d'éthylène d'acides carboxyliques à longues chaînes, tels que les acides laurique, myristique, palmitique ou oléique ou les mélanges d'acides tels que les acides gras de tallöl ; et les dérivés oxyde d'éthylène d'alcools à longues chaînes tels que les alcools octylique, décylique, laurylique ou cétylique.

Les quantités de tensio-actifs mis en oeuvre dans le procédé de polymérisation en émulsion varient entre environ 0,01 et environ 10 % en poids, de préférence entre environ 0,2 et environ 5 % en poids par rapport au poids total de monomères et d'eau.

En plus des tensio-actifs, le système de polymérisation en émulsion peut contenir aussi des colloïdes protecteurs. Comme exemples de colloïdes protecteurs, on peut citer les colloïdes protecteurs comportant des liaisons éther, tels que l'hydroxyméthylcellulose, l'hydroxyéthylcellulose, l'éthyl-hydroxyéthylcellulose, la carboxyméthylcellulose, les dérivés éthoxylés de l'amidon et autres similaires. D'autres substances colloïdales de protection peuvent être utilisées également, seules ou en association avec des produits comportant des liaisons éther. D'autres colloïdes de protection comportent des alcools polyvinyliques hydrolysés en partie ou en totalité, de l'acide polyacrylique, des polyacrylates de sodium et d'autres métaux alcalins, du polyacrylamide, du poly(méthyl vinyl éther/anhydride maléique), de la polyvinylpyrrolidone, des amidons hydrosolubles, de la colle, de la gélatine, des alginates hydrosolubles, tels que les alginates de sodium ou de potassium, la caséine, l'agar et les gommes naturelles et synthétiques, tels que le guar, la xanthane, la gomme arabique et la gomme tragacanthe. Les colloïdes de protection peuvent être mis en oeuvre en quantités comprises entre environ 0,1 % en poids et environ 2 % en poids par rapport au poids total de la dispersion de polymères. Dans le cadre de la présente invention, on peut parfaitement envisager d'utiliser d'autres tensio-actifs.

Les monomères mis en oeuvre dans la présente invention sont polymérisés de préférence à l'aide d'un initiateur de polymérisation classique à radicaux libres ou d'un système d'initiateurs (que l'on peut appeler également catalyseur de polymérisation par addition, catalyseur de polymérisation vinylique ou initiateur de polymérisation), de préférence, mais pas nécessairement, très soluble dans l'eau. Parmi lesdits initiateurs, on compte les peroxydes d'hydrogène, l'hydroperoxyde de butyle tertiaire, l'hydro-peroxyde de cumène, les persulfates, perphosphates et perborates de métaux alcalins (tels que, par exemple, sodium, potassium ou lithium) ou d'ammoniac ; les nitriles azo, tel que l'alpha, alphaazobisisobutyronitrile, et les systèmes redox comportant des combinaisons tels que les mélanges de peroxyde d'hydrogène, t-butyl peroxyde ou autres similaires et de n'importe lequel des sels de fer, sels titaneux, formaldéhyde sulfoxylate de zinc ou formaldéhyde sulfoxylate de sodium ; les persulfate, perborate ou perchlorate de métaux alcalins ou d'ammonium en association avec un bisulfite de métal alcalin, tel que le métabisulfite de sodium ; et le persulfate de métal alcalin en association avec un acide arylphosphinique, tel que l'acide benzène phosphonique et autres similaires. La quantité d'initiateur de polymérisation mise en oeuvre ne sera pas supérieure à celle nécessaire pour obtenir une conversion très complète du monomère à bas prix. La quantité d'initiateur varie en règle générale entre environ 0,1 et 1 % en poids par rapport au poids des monomères ajoutés.

L'émulsification et la réaction de polymérisation peuvent être effectuées par n'importe quel procédé connu mis en oeuvre pour obtenir des polymères en émulsion. Par exemple, les monomères, catalyseurs, tensio-actifs, les éventuels colloïdes de protection et les éventuels agents de transfert de chaînes, tels que les alkylmercaptans, peuvent tous être introduits dans le réacteur, agité de façon appropriée afin d'obtenir une émulsification à une température comprise entre environ 30°C et environ 95°C jusqu'à ce que la polymérisation soit complète.

On peut également conduire la réaction de la façon suivante : on introduit l'eau, les tensio-actifs et les éventuels colloïdes de protection dans le réacteur, on chauffe jusqu'à ce que la température réactionnelle soit atteinte et, ensuite, on ajoute les monomères et une solution d'initiateur dans le réacteur en agitant. Il existe encore une autre méthode qui consiste à pré-émulsifier les monomères dans une partie de l'eau et une partie du tensio-actif avec l'initiateur, à introduire la pré-émulsion dans le réacteur qui contient le reste de l'eau et du tensio-actif.

Pour obtenir des compositions formant des revêtements ayant des propriétés supérieures lorsqu'elles réticulent à la température ambiante ou à des températures élevées, il faut, dans les modes de réalisation préférentiels, que le glycidyl et l'acide soient présents dans certains rapports préférentiels. On a trouvé que le groupe acétoacétoxy et le groupe glycidyle doivent être présents dans un rapport en poids inférieur ou égal à 0,5, les rapports en poids étant calculés par rapport au poids de l'acétoacétoxyéthyl (méth)acrylate et du glycidyl (méth)acrylate. Le groupe glycidyle et le groupe acide carboxylique doivent être présents dans un rapport en poids supérieur à 1,0, les rapports en poids étant fondés sur le poids du glycidyl (méth)acrylate et du (des) acides polymérisable(s) à insaturation éthylénique. Par ailleurs, le pourcentage en poids total des trois monomères (composants (a), (b) et (c) utilisés pour former le polymère doit être d'au moins environ 2 % et ne pas dépasser environ 60 %, lesdits pourcentages se rapportant au poids total de tous les monomères mis en oeuvre pour former le polymère.

La quantité d'eau mise en oeuvre pour obtenir les compositions selon la présente invention est fonction de la teneur en solides que l'on désire avoir dans le latex polymère fini. En règle générale, la teneur en solides est comprise entre environ 20 % et environ 70 % en poids. La teneur en solides est comprise de préférence entre environ 40 % et environ 60 % en poids.

Dès que la polymérisation en émulsion est terminée, on ajuste le pH à une valeur comprise entre environ 6,5 et environ 10 avec une base hydrosoluble. Les bases qui conviennent sont des bases à base de métaux alcalins, d'ammoniac et d'ammonium quaternaire. Comme exemples de bases appropriées, on peut citer l'ammoniac, les hydroxydes de sodium, potassium, tétraméthylammonium, tétraéthylammonium, tétrabutylammonium, benzyl-triméthylammonium et autres similaires. L'une des bases préférées plus particulièrement est l'hydroxyde de tétraméthylammonium.

La composition aqueuse de revêtement peut contenir, en plus du latex visé ci-dessus, n'importe quel liant utilisé dans les compositions de revêtement de ce type. Comme liant on peut citer les latex acrylate, Styrène/acrylate et copolymères acétate, les dispersions aqueuses de polyuréthanne, de poyester, d'époxy, d'alkydes et les résines polyuréthannes, époxy et alkydes.

Ces liants peuvent remplacer jusqu'à 80 % en poids, de préférence jusqu'à 50 % en poids, du latex présent dans les compositions aqueuses de revêtement de la présente invention.

Destinées à être utilisées comme liant dans les peintures, les compositions aqueuses de revêtement à base de latex polymère selon la présente invention peuvent être appliquées sur un grand nombre de substrats pour former des films et revêtements qui réticulent et donnent des compositions thermodurcies à la température ambiante ou à des températures élevées. Les températures de réticulation préférentielles varient entre environ -10°C et environ 100°C.

L'une des applications qui convient tout particulièrement aux produits selon l'invention réside dans les revêtements du bois. On entend ici par revêtements du bois tous les types de bois et toutes les formes de revêtements du bois, tels que meubles, revêtements de sols commerciaux, revêtements de sols résidentiels, sols de patios, parquets vernis industriellement, lambris, charpentes, moulures, meubles de rangement et autres similaires. Lorsqu'elles sont utilisées comme revêtements du bois, les dispersions aqueuses selon l'invention peuvent comporter d'autres additifs destinés à accroître leurs performances. Comme exemples de ces additifs, on peut citer les épaississants, les antimousses, et les glycols destinés à prévenir les réticulations prématurées, les agents de coalescence, les pigments, les activateurs de bases. Ces additifs représentent habituellement moins de 5 % en poids des solides présents dans la dispersion aqueuse finale.

Utilisées pour les revêtements du bois, les compositions aqueuses selon la présente invention, contenant éventuellement des additifs, sont appliquées tout simplement à la surface du bois, leur épaisseur étant comprise entre environ 25 μm et environ 75 μm, à l'aide d'une brosse, d'un rouleau et de tout autre moyen bien connu dans le métier. Ensuite, on laisse la dispersion réticuler à des températures variant entre environ 5°C et environ 40°C, de préférence, en particulier, entre environ 5°C et environ 15°C. Dans les 12 heures qui suivent l'application, la dispersion commence à réticuler et forme un film durci. L'opération de réticulation est terminée à au moins 85 % au bout d'environ 48 heures et donne un film transparent, incolore et brillant.

Les compositions aqueuses selon l'invention sont plus particulierement utilisables dans les peintures à l'eau. De telles peintures sont applicables sur n'importe quel support tel qu'un mur non traité, du bois, des parements, du métal, du béton, des matières plastiques, du verre et similaires. Utisées dans les peintures, les formulations finales peuvent contenir des additifs pour améliorer les propriétés. Des exemples de tels additifs incluent des épaississants, des agents démoussants,des modificateurs de temps ouvert et des glycols pour éviter une réticulation prématurée, des agents coalescents des agents anti-bloquants,des activateurs, des catalyseurs, des pigments et similaires. Ces additifs représentent typiquement moins de 5 % en poids des solides présents dans la dispersion aqueuse finale. Par ailleurs en adaptant la quantité volumètrique de pigment et la teneur finale en matières solides et en additifs dans les formules de revêtement, on peut obtenir différentes qualité de fini de la peinture allant du mat au très brillant suivant la destination finale de la peinture.

En plus des applications particulières décrites en détail ci-dessus, les compositions de revêtement aqueuses selon l'invention peuvent être utilisées pour réaliser également des colles, des adhésifs sensibles à la pression (PSA), des vernis de surimpression et des compositions de peinture industrielles.

Les peintures industrielles de revêtement sont appliquées et séchées dans des conditions parfaitement définies et maitrisées. La plupart du temps l'application de la peinture industrielle est une des étapes de la fabrication des objets peints. On peut citer l'application de peinture ou vernis par pulvérisation, par trempé ou par rouleaux sur bois, matière plastique ou métal (marché de l'automobile, de l'électroménager, de l'ameublement et du coil-coating etc...).

Lorsqu'on les met en oeuvre, les dispersions selon la présente invention, y compris les éventuels additifs, sont appliquées tout simplement sur une surface, leur épaisseur étant comprise entre environ 25 et environ 100 μm, à l'aide d'une brosse, d'un rouleau ou de tout autre moyen bien connu dans le métier. Ensuite, on laisse la dispersion réticuler à des températures comprises entre environ 5°C et environ 40°C; de préférence, en particulier, entre environ 5°C et environ 25°C et plus particulièrement encore entre environ 5°C et environ 15°C.

Dans les 12 heures suivant l'application, la dispersion commence à réticuler et former un film durci. Au bout de 48 heures, la réticulation est terminée à au moins 85 %. On peut renouveler l'application pour obtenir de multiples couches de peinture.

En plus des propriétés esthétiques et physiques qu'ils apportent, les produits de revêtement selon l'invention contiennent beaucoup moins de substances organiques volatiles (SOV) que la plupart des peintures, sinon toutes, que l'on trouve dans le commerce. Ce sont des produits idéaux pour la commercialisation.

Les exemples qui suivent donnent une description plus détaillée de l'invention. Sauf indication contraire, les parties et pourcentages indiqués sont en poids.

Le degré de réticulation des films est déterminé dans les exemples par des tests de recherche de leur teneur en gel et par le calcul de leur indice de gonflement. Ces déterminations sont réalisées sur des films abandonnés aux conditions ambiantes pendant au moins 48 heures. Les films sont retirés du substrat et testés comme suit :

(1) on pèse dans des flacons en verre des doubles des échantillons des films dont le poids est de l'ordre de 2 g ;

(2) on ajoute 75 ml de toluène dans chaque flacon que l'on scelle et agite énergiquement ;

(3) au bout de trois jours, on dépose le contenu des flacons sur un tamis en nylon à mailles fines que l'on a pesé et on lave à fond avec du toluène ;

(4) on pèse le tamis, puis on fait sécher sous vide dans une étuve et on pèse ;

(5) après avoir déterminé le poids du gel humide et du gel sec, la teneur en gel et l'indice de gonflement sont calculés comme suit :

$$\text{Teneur en gel, \%} = \frac{\text{poids du gel sec x 100}}{\text{poids du film}}$$

$$\text{Indice de gonflement} = \frac{\text{poids du gel humide} - \text{poids du gel sec}}{\text{poids du gel sec}}$$

Les teneurs en gel d'au moins environ 95 % et les indices de gonflement inférieurs à 5 indiquent que la réticulation des films a été satisfaisante.

## Exemple 1

Dans un réacteur approprié équipé de deux ampoules à brome, d'un condenseur, d'un agitateur et d'un thermomètre, on introduit 355 parties d'eau, 1,95 parties de bicarbonate de sodium et 9,83 parties de tensio-actif, à savoir de nonyl phényl polyéthylène glycol éther phosphaté. Dans l'une des ampoules à brome, on ajoute 11,45 parties de méthacrylate de méthyle, 128,57 parties de acrylate de butyle, 10 parties d'acétoacétoxyéthyl méthacrylate, 7,5 parties d'acide acrylique et 22,5 parties de glycidyl méthacrylate. Dans la seconde ampoule à brome on introduit 40,43 parties d'eau et 1,13 parties de peroxydisulfate d'ammonium. On commence à agiter et à chauffer jusqu'à ce que la température dans le réacteur atteigne 85°C. On introduit dans le réacteur une charge initiale de 0,06 partie de peroxydisulfate d'ammonium dans 19,5 parties d'eau et on commence à ajouter lentement les monomères et le catalyseur. La température étant maintenue à 85°C, on ajoute les monomères pendant une durée de 2 heures et le catalyseur pendant une durée de 2 heures et 5 minutes. On abaisse la température à 70°C et on ajoute 0,3 partie de t-butylhydroperoxyde. On abaisse ensuite la température à 35 °C et on ajoute une solution de 0,3 partie de formaldéhyde sulfoxylate de sodium dans 9,89 parties d'eau. Lorsque la température atteint 25°C, on ajoute 4,89 parties d'hydroxyde d'ammonium à 28 % et 1,18 parties d'inhibiteur de développement de bactéries. Le latex stable que l'on obtient a une viscosité de 25 mPa.s, une teneur en solides de 40,45 % et un pH de 5,2.

On ajuste le pH d'une partie du latex à 7,5 avec de l'ammoniac et ensuite à 9,0 avec de l'hydroxyde de sodium (Ex. 1A). On en ajuste une autre partie à 9.0 avec de l'hydroxyde de tétraméthylammonium (Ex. 1B). On dépose des films sur des plaques de verre et on les soumet aux conditions ambiantes pendant 48 heures. On détache les films du substrat et on les soumet aux tests dont les résultats figurent dans le Tableau 2.

## Exemple 2

On procède comme décrit dans l'exemple 1 et on polymérise 143,76 parties de méthacrylate de méthyle, 165,79 parties d'acrylate de butyle, 9,03 parties d'acide méthacrylique, 14,45 parties d'acétoacétoxyéthyl méthacrylate et 28,9 parties de glycidyl méthacrylate. Le latex obtenu a une viscosité de 1 100 mPa.s et une teneur en solides de 47,32 %. On ajuste le pH du latex avec de l'hydroxyde de tétraméthyl ammonium. On dépose des films sur des plaques de verre que l'on soumet aux conditions ambiantes pendant 48 heures. Le film résiste à 108 frottements en va-et-vient avec de la méthyléthylcétone. Les résultats des tests effectués avec d'autres films figurent dans le Tableau 2.

## Exemple 3

On procède comme décrit dans l'exemple 1 et on polymérise 111,49 parties de méthacrylate de méthyle, 128,57 parties d'acrylate de butyle, 5,01 parties d'acide acrylique, 7,42 parties d'acétoacétoxyéthyl méthacrylate et 10,2 parties de glycidyl méthacrylate. Le latex obtenu a une viscosité de 27,5 mPa.s, une teneur en solides de 40,74 % et un pH de 7,45. Le pH est ajusté à 7,5 avec de l'ammoniac et à 9,0 avec de l'hydroxyde de sodium. Les films réalisés à partir de ce latex sont testés après avoir été soumis aux conditions ambiantes pendant 48 heures. Les résultats des tests figurent dans le Tableau 2.

## Exemple 4

On procède comme décrit dans l'exemple 1 et on prépare un latex en polymérisant 111,49 parties de méthacrylate de méthyle, 128,57 parties d'acrylate de butyle, 5,02 parties d'acide acrylique et 22,06 parties d'acétoacétoxyéthyl méthacrylate. Le latex a une viscosité de 22,5 mPa.s, une teneur en solides de 39,88 % et un pH de 7,38. On ajuste le pH à 7,5 avec de l'ammoniac et à 9,0 avec de l'hydroxyde de sodium. Les films réalisés à partir de ce latex sont testés après avoir été soumis aux conditions ambiantes pendant 48 heures. Les résultats figurent dans le Tableau 2.

## Exemple 5

On procède comme décrit dans l'exemple 1 et on prépare un latex en polymérisant 142,13 parties de méthacrylate de méthyle, 163,87 parties d'acrylate de butyle, 6,4 parties d'acide acrylique et 19 parties de glycidyl méthacrylate. Le latex a une viscosité de 147,5 mPa.s, une teneur en solides de 45,74 % et un pH de 7,4. On ajuste le pH à 9,0 avec de l'ammoniac et de l'hydroxyde de sodium. Les films réalisés à partir de ce latex sont testés après avoir été soumis aux conditions ambiantes pendant 48 heures. Les résultats des tests figurent dans le Tableau 2.

**Exemple 6**

On procède comme décrit dans l'exemple 1 et on prépare un latex en mettant en oeuvre 145,8 parties de méthacrylate de méthyle, 168,1 parties d'acrylate de butyle et 9,83 parties d'acide acrylique. Le latex a une viscosité de 1 650 mPa.s, une teneur en solides de 45,34 % et un pH de 7,3. On ajuste une partie du latex à 7,3 avec de l'ammoniac. On ajuste le pH d'une autre partie du latex à 9,0 avec de l'hydroxyde de tétraméthylammonium (TMAH). Les films réalisés à partir de ce latex sont testés après avoir été soumis pendant 48 heures aux conditions ambiantes. Le film réalisé avec la partie contenant du TMAH résiste à 38 frottements en va-et-vient avec de la méthyléthyl-cétone. Les résultats des tests figurent dans le Tableau 2.

**Exemple 7**

On procède comme décrit dans l'exemple 1 et on prépare un latex en polymérisant 153,11 parties de méthacrylate de méthyle, 176,47 parties d'acétoacétoxyéthyl méthacrylate et 21,73 parties de glycidyl méthacrylate. Le latex a une viscosité de 75 mPa.s et une teneur en solides de 39,88 %. On ajuste le pH à 9,0 avec du TMAH. Les films obtenus à partir de ce latex sont testés après avoir été soumis pendant 48 heures aux conditions ambiantes. Les résultats des tests figurent dans le Tableau 2.

**Exemple 8**

On procède comme décrit dans l'exemple 1 et on prépare un latex en polymérisant 120 parties de méthacrylate de méthyle, 138,74 parties d'acrylate de butyle et 8 parties d'acide acrylique. Le latex a une viscosité de 20 mPa.s et une teneur en solides de 40,38 %. On ajuste le pH à 8,5 avec du TMAH. Les films obtenus à partir de ce latex sont testés après avoir été soumis pendant 48 heures aux conditions ambiantes.

**Exemple 9**

On procède comme décrit dans l'exemple 1 et on prépare un latex en polymérisant 39,04 parties de méthacrylate de méthyle, 110,84 parties de méthacrylate de méthyle 18,35 parties d'acide méthacrylique, 45,85 parties d'acétoacétoxyéthyl méthacrylate et 91,76 parties de glycidyl méthacrylate. Le latex obtenu a une viscosité de 15 mPa.s et une teneur en solides de 40,96 %. On ajuste le pH à 8,5 avec du TMAH. Les films obtenus à partir de ce latex sont testés après avoir été soumis pendant 48 heures aux conditions ambiantes. Les résultats des tests figurent dans le Tableau 2.

## Tableau 1

## Teneurs en monomères

| Ex. | AAEM % | GMA % | MMA/ AA % | Autre monomère % |
|-----|--------|-------|-----------|------------------|
| 1 | 3,5 | 8 | 2,5 | 86 |
| 2 | 4 | 8 | 2,5 | 85,5 |
| 3 | 3 | 4 | 2 | 91 |
| 4 | 8 | - | 2 | 90 |
| 5 | - | 6 | 2 | 92 |
| 6 | - | - | 3 | 97 |
| 7 | 3 | 6 | - | 91 |
| 8 | - | - | 3 | 97 |
| 9 | 15 | 30 | 6 | 49 |

AAEM - acétoacétoxyéthyl méthacrylate

GMA - méthacrylate de glycidyle

MMA - acide méthacrylique

AA - acide acrylique

## Tableau 2

| Ex. | Teneur en gel % | Indice de gonflement | Résistance traction $(10^3 \text{ Pa})$ | Allongement % |
|-----|-----------------|----------------------|-----------------------------------------|---------------|
| 1A | 96,13 | 4,02 | 7922 | 182 |
| 1B | 96,34 | 2,98 | 7026 | 173 |
| 2 | 97,5 | 2,58 | 10900 | 123 |
| 3 | 95,09 | 6,61 | 5612 | 277 |
| 4 | 91,2 | 8,39 | 6481 | 265 |
| 5 | 92,31 | 8,2 | 7708 | 239 |
| 6* | 83,82 | 28,66 | 6005 | 376 |
| 6** | 79,75 | 30,56 | 2648 | 475 |
| 6*** | 97,08 | 3,03 | 9191 | 143 |
| 7 | 88,28 | 8,47 | 5400 | 317 |
| 8 | 79,75 | 30,56 | 2648 | 475 |
| 9 | 97,2 | 1,04 | 15168 | 5 |

\*     Exemple 6, neutralisation à l'ammoniac - pH 7,3

\*\*    Exemple 6, neutralisation au TMAH - pH 9,0

\*\*\* Exemple 6, en mélange avec de la polyaziridine - (2% p/p) - Xama 7 de Sanncor Industries

Les revêtements préparés à partir des compositions selon la présente invention sont ceux des exemples 1, 2, 3 et 9.

**Exemple 10**

Dans un réacteur équipé d'un condenseur, d'un agitateur, d'un thermomètre et de deux pompes doseuses on introduit 431 parties d'eau, 10,28 parties de tensioactif, à savoir de nonylphénylpolyéthylèneglycol phosphaté, et 1,98 parties de bicarbonate de sodium. On commence à agiter et on chauffe jusqu'à ce que la température atteigne 75°C. On ajoute une charge initiale de 0,07 partie de persulfate d'ammonium. Tout en maintenant la température à 75°C, on pompe dans le réacteur pendant une durée de 2 heures et 30 minutes un mélange de monomères constitué de 1,97 parties d'éthylèneglycol diméthacrylate, 24,99 parties d'acétoacétoxyéthyl méthacrylate, 49,57 parties de glycidylméthacrylate, 50,92 parties de styrène et 66,99 parties d'acrylate de butyle. Simultanément, on pompe dans le réacteur pendant une durée de 2 heures et 45 minutes une solution d'initiateur constituée de 0,59 parties de persulfate d'ammonium et de 21,12 parties d'eau. 45 minutes après avoir terminé l'ajout de ladite solution d'initiateur, on commence à ajouter pendant également une durée de 2 heures et 45 minutes une seconde charge de solution d'initiateur constituée de 0,59 parties de persulfate d'ammonium et de 21,15 parties d'eau. En même temps que ce deuxième ajout de monomère, on pompe dans le réacteur pendant une durée de 2 heures et 20 minutes un deuxième mélange de monomères constitué de 4,13 parties d'acide acrylique, 1,88 parties d'acide méthacrylique, 59,44 parties de méthacrylate de méthyle et 129, 74 parties d'acrylate d'éthyle. Après avoir ajouté tous les mélanges d'initiateurs et de monomères, on maintient la température à 75°C en continuant d'agiter pendant 45 minutes. On abaisse la température à 70°C et on ajoute 0,5 partie d' hydroperxoxyde de t-butyl(actif à 70 %). Après avoir refroidi à 35°C, on ajoute une solution constituée de 0,5 parties de métabisulfite de sodium et de 10 parties d'eau. On ajuste le pH du latex à 8,5 avec du TMAH à 10 %. La teneur en gel du latex est de 96,0, l'indice de gonflement de 3,3, la résistance à la traction de 13789 x $10^3$ Pa, l'allongement de 180 %, la viscosité de 100 mPa.s, la teneur en solides de 43 % et la température minimale de formation du film de 10°C.

## Exemple 11

### 11-1 : préparation du latex

Dans un réacteurs équipé d'un condenseur, d'un agitateur, d'un thermomètre et de moyens d'alimentation, on introduit 1450 parties d'eau déionisée, et 42,4 parties d'un tensioactif qui un éther de nonylphénylpolyéthylène glycol phosphatè. On commence l'agitation et, après mise en solution complète du tensioactif, on ajuste le pH à 3,8 par addtion d'une solution d'hydroxyde de sodium à 10%. On chauffe le réacteur jusqu'à atteindre une température de 80°C. On introduit dans le réacteur une charge initiale de 0,32 parties de peroxydisulfate d'ammonium dans 5 parties d'eau, suivi immédiatement de l'addition pendant 2 heures et 30 mn d'un mélange de monomères comprenant 203,2 paries de glycidylméthacrylate, 208,8 parties de styrène, 275,2 parties d'acrylate de butyle, 8,0 parties d'éthylénéglycol diméthacrylate et 102,4 parties d'acétoacétoxyéthyl méthacrylate. En même temps on effectue 2 alimentations supplémentaires comportant 2,4 parties d'un amorceur peroxydisulfate d'ammonium dissous dans 87,5 parties d'eau et un tampon formé de 5,6 parties de bicarbonate de sodium dissous dans 87 parties d'eau. On introduit ces 2 alimentations supplèmentaires pendant 2 heures 40 minutes en maintenant le mélange réactionnel à 80°C. Les alimentations terminèes, on abaisse la température du milieu réactionnel à 750°C pendant une heure. A la fin de cette heure, on introduit 8,0 parties d'acide méthacrylique, 17,0 parties d'acide acrylique, 244 parties de méthacrylate deméthyle et 532,8 parties d'acrylate d'éthyle. Cette introduction dure 2 heures et 30 minutes. De façon concomittente, on introduit un initiateur et un tampon pendant 2 heures 40 minutes en maintenant la température à 75°C. On refroidit le latex résultant et on ajoute au latex une solution de 2,1 parties d'hydroperoxyde de t-butyle. A 35°C on ajoute au latex pendant 15 minutes une solution de 2,1 parties de pyrosulfite de sodium dissous dans 40,0 parties d'eau. On refroidit encore le latex obtenu et on le décharge. Il présente un pH de 5,9 une viscosité de 62 mPa.s et une teneur en solides de 46,8 %.

Une partie de ce latex est conservé en l'état et est appelé latex A, l'autre partie est ajustè à pH 8,5 par une solution à 10,5 % d'hydroxyde d'ammonium et est appelè latex B.

On appelle latex A, le latex obtenu à pH = 5,9 à la sortie du réacteur et latex B, le latex à pH 8,5 mentralisé à l'ammoniaque.

### 11-2 : Caractérisation des latex

Les films delatex sont formés et conditionnés à 22°C et 50% d'humidité relative.

1. Mesures de gonflement :

Le degré de réticulation des films issus de dispersions d'Ambicure est déterminé par mesure de gonflement dans le trichoréthylène.

(1) le film de latex est découpé en morceaux d'environ 0,25 g

(2) l'échantillon est pesé avec précision puis placé dans un panier à maille de 112 μm

(3) le panier contenant l'échantillon est ensuite immergé dans le trichlorèthylène.

(4) Après 24h, l'échantillon est pesé et le pourcentage de gonflement du film d'Ambicure déterminé.

Le calcul du % de gonflement s'effectue d'après la formule suivante :

$$\% \ Gon \ = \ (M_{gon} \ - \ M_{film}) * 100/M_{film}$$

où Mgon, représente le poids de i'échantillon gonflé par le solvant et Mfilm, le poids de l'échantillon avant immersion.

Les % de gonflement obtenus respectivement après 1 et 7 jours sont indiqués ci-dessous :

| Latex | % | % |
|---|---|---|
| | Gonflement (24h) | Gonflement (7 j) |
| A | 874 | 661 |
| B | 603 | 514 |

2- Mesures d'allongement/rupture :

Les résultats en terme d'allongement/rupture, arpès 7 jours de maturation des films, sont indiqués ci-dessous :

| Latex | Allongement % | Contrainte à la rupture (MPa) |
|---|---|---|
| Latex A | 195 | 6,7 |
| Latex B | 225 | 8,3 |

La dureté Persoz est donnée après 7 Jours de maturation des films. Elle est de 73 pour le latex A et de 87 pour le latex B.

**Exemple 12**

A un réacteur équipé d'un condensateur, d'un agitateur, d'un termomètre et de moyens d'alimentation, on ajoute 400 parties d'eau déionisée et de 10,32 parties d'un tensioactif à savoir un éther de monylphénylpolyèthylène glycol phosphatè. On commence à agiter et une fois terminè l'addition du tensioactif, on règle le pH par addition de 1,98 parties d'hydrogénocarbonate de sodium. On porte la température à l'intérieur du réacteur à 75°C. On effectue une première charge de 0,07 partie de peroxydisulfate d'ammonium dans 5 parties d'eau, suivie immédiatement par l'addition pendant 2 heures 30 minutes d'un mélange de monomères comportant 74,91 parties de styrène, 17,35 parties d'acrylate de butyle, 1,92 parties d'éthyléne glycol méthacrylate 37,35 parties d'acétoacétoxy éthylméthacrylate et 1,84 parties d'acrylate d'éthyle. On charge en même temps 0,59 parties de péroxydisulfate d'ammonium dissous dans 21,1 parties d'eau. Cette derniére charge est effectuèe durant 2 heures et 40 minutes en maintenant le mélange réactionnel à 75°C. Ces charges terminèes, on maintient la température du mélange réactionnel à 75°C pendant 1 heure. Au bout d'une heure on commence une charge comportant 2,2 parties d'acide méthacrylique, 3,91 parties d'acide acrylique, 57,49 parties d'acrylate de butyle et 126,53 parties de styrène. On introduit ces monomères pendant 2 heures et 30 minutes. En même temps on introduit la même solution d'initiateur que ci-dessus durant 2 heures et 40 minutes en maintenant la température à 75°C. On refroidit le latex obtenu à 70°C et on ajoute au latex une solution comprenant 0,5 parties d'une solution à 70°C d'hydroperoxyde de t-butyle. On ajoute à 35°C au latex une solution de 0,5 parties de pyrosulfite de sodium dissous dans 10,0 parties d'eau. On refroidit encore le latex obtenu et on le décharge du réacteur. Il a alors un pH de 5,4, une viscositè de 30 mPa.s et une teneur en solides de 44,0 %. Le pH du latex est réglé à 8,5 par addition d'une solution d'hydroxyde d'ammonium à 10%.

**Exemple 13**

A un réacteur équipé d'un condensateur, d'un agitateur, d'un thermomètre et de moyens d'alimentation, on ajoute 800 parties d'eau déionisée et 20,72 parties d'un tensioactif à savoir un éther de monylphénylpolygéthylène glycol phosphatè. On commence à agiter et une fois terminèe l'addition du tensioactif, on régle le pH par addition de 3,96 parties d'hydrogénocarbonate de sodium. On porte la température à l'intérieur du réacteur à 75°C. On effectue une première charge de 0,14 partie de peroxydisulfate d'ammonium dans 5 parties d'eau, suivie immédiatement par l'addition pendant 2 heures 30 minutes d'un mélange de monomères comportant 104,0 parties de glycidyl méthacrylae, 32,0 parties de styrène, 179,0 parties d'acrylate de butyle, 4,04 parties d'éthyléne glycol méthacrylate et 54,40 parties d'acétoacétoxyéthyléméthacrylate. On charge en même temps 1,18 parties de peroxydisulfate d'ammonium dissous dans 42,3 parties d'eau. Cette derniére charge est effectuée durant 2 heures et 40 minutes en maintenant le mélange réactionnel à 75°C. Ces charges terminées, on maintient la température du mélange réactionnel à 75°C pendant 1 heure. Au bout d'une heure on commence une charge comportant 4,07 parties d'acide méthacrylique, 7,96 parties d'acide acrylique 71,67 parties de méthacrylate de méthyle et 336,3 parties d'acrylate d'éthyle. On introduit ces monoméres pendant 2 heures et 30 minutes. En même temps on introduit la même solution d'initiateur que ci-dessus durant 2 heures et 40 minutes en maintenant la température à 75°C. On refroidit lelatex obtenu à 70°C et on ajoute au latex une solutionà 70% d'hydroperoxyde de t-butyle. On ajoute à 35°C au latex une solution de 1,0 parties de pyrosulfite de sodium dissous dans 20,0 parties d'eau. On refroidit encore le latex obtenu et on la décharge du réageur. Il a alors un pH de 8,1, une viscosité de 140 mPa.s et une teneur en solides de 46,8%. Le pH du latex est réglé à 8,5 par addition d'une solution d'hydroxyde d'ammonium à 10%.

## Exemple 14

### A) Formulation de revêtement pour le bois

On prépare une formulation de revêtement transparent pour le bois en dispersant 667 parties de la composition selon l'exemple 10, 1 partie d'un dioctyl sulfosuccinate de sodium dans un milieu constitué de 169,6 parties d'eau, 4 parties de Rheolate 300, épaississant commercialisé par Rheox Inc., 2,2 parties de Colloid 652, antimousse, commercialisé par Rhône-Poulenc Inc., 25,9 parties de propylèneglycol servant d'agent modifiant et 5,7 parties d'hydroxyde d'ammonium. Cette formulation a une teneur en COV (composés organiques volatiles) de 34,0 g/l. Sa teneur en solides est de 35,3 % en poids ou de 32,5 % en volume. La viscosité de Stormer de cette formulation est de 61 ± 3 KU.

On compare la présente formulation à deux produits que l'on trouve dans le commerce et qui sont vendus comme produits de revêtement pour le bois. On mesure les propriétés suivantes à la fois de la formulation selon l'invention et des produits du commerce :

1) Teneur en COV exprimée en grammes par litre

2) Pourcentage en poids de subsances non volatiles

3) Le brillant à 60° et à 20° est mesuré en formant un film de 75 μm à l'aide d'un tire-film sur une carte Leneta Form 2C

4) La dureté du crayon est mesurée à l'aide du test ASTM D-3363

5) La résistance au gel/dégel est mesurée à l'aide du test ASTM 2243

6) La durée de séchage est mesurée à partir du moment où la composition est appliquée jusqu'à ce qu'elle soit sèche au toucher lorsqu'elle est appliquée avec étirage sur un appareil Leneta Form 2 C Card à 22 °C et 47 % d'humidité relative

7) Brillant à 60° et 20° sur bois de peuplier - les formulations de revêtement pour bois sont appliquées à l'aide d'une brosse en nylon sur du bois de peuplier et sont séchées. On répète cette opération à deux heures d'intervalle jusqu'à application de trois couches complètes.

8) La résistance aux empreintes est déterminée en plaçant pendant dix minutes une tasse à café en porcelaine contenant 175 g d'eau à 79 °C sur une surface revêtue. On retire la tasse et on procède à une évaluation qualitative de la résistance aux empreintes. 10 correspond à une excellente résistance aux empreintes.

9) Résistance aux produits chimiques/solvants : la résistance de la composition de revêtement à différents solvants et produits chimiques ménagers est mesurée comme suit : on applique trois (3) gouttes de chaque solvant sur le revêtement, on recouvre le solvant avec un verre de montre pendant quatre (4) heures, on retire le verre de montre et le produit testé et on procède à l'analyse qualitative de l'éprouvette sur une échelle allant de 0 à 10, 10 étant le meilleur résultat. On utilise les solvants et produits ménagers suivants et on additionne les résultats de chaque produit pour obtenir la valeur indiquée dans le Tableau 4 : eau, vodka, nettoyant Fantastik®, dissolvant pour vernis à ongles, dissolvant pour vernis à ongles sans acétone, café, thé, jus de citron, ketchup, moutarde, hydroxyde de sodium à 10 % et vin rouge.

Les résultats des tests ci-dessus figurent dans le Tableau 3.

**Tableau 3**

|  | Formulation | Produit | Produit |
|---|---|---|---|
|  | selon invention | commercial A | commercial B |
| Teneur en COV (g/l) | 34,0 | < 350 | < 300 |
| Non-volatiles | 35,4 | 34,0 | 32,0 |
| Brillant, 60°/20° 3 mil | 86/82 | 89/54 | 94/66 |
| Dureté crayon | 6B | 2B | 4B |
| Résistance gel/dégel (cycles subis) | 5 | 5 | 5 |
| Temps séchage (complet, mn) | 3,5 | > 10 | 5,0 |
| Brillant, 60°/20°, peuplier, avec grain 3 couches | 66/15 | 58/10 | 66/14 |
| Résistance aux empreintes (10=très bien, 0=très mauvais) | 10 | 9 | 10 |
| Résistance Prod.chimiques/solvants Maximum = 120 | 92 | 82 | 92 |

Les résultats ci-dessus montrent que la formulation selon l'invention à base de latex de l'exemple 10 permet d'obtenir des performances comparables, voire supérieures à celles des deux produits du commerce. La formulation selon l'invention possède, en revanche, une très faibles teneur en COV et, par conséquent, présente en ce qui concerne la protection de l'environnement un plus grand intérêt que les deux produits du commerce.

**Exemple 15**

**B) Formulation de peinture brillante :**

On prépare une formulation de peinture blanche ultra-brillante en dispersant 580,0 parties de la composition selon l'exemple 10, 2,0 parties de dioctyl sulfosuccinate de sodium (Pentax 99, commercialisé par Rhône-Poulenc Inc.), 14,0 parties de Rheolate 300, épaississant commercialisé par Rheox, Inc., 4,0 parties d'hydroxyde d'ammonium, 12,0 parties d'un agent de coalescence, à savoir de tri-propylèneglycol méthyléther (Dawanol TPM, commercialisé par Dow Chemical Company) et 4,0 parties de Foamex 1488 (antimousse, commercialisé par Tego Chemie Service USA) dans un milieu constitué de 170,0 parties d'eau, 9,0 parties de Colloid 111, agent de dispersion anionique, commercialisé par Rhône-Poulenc Inc., 2,0 parties d'un tensio-actif non ionique, à savoir un alkylphénoxy-poly(éthylèneoxy) éthanol modifié, commercialisé par Rhône-Poulenc Inc., 1,0 partie de 2-amino-2-méthyl-1-propanol contenant 5 % d'eau (AMP, commercialisé par Angus Chemicals, Northbrook, IL), 25,9 parties de propylèneglycol, 2,0 parties de Foamex 1488 et 180,0 parties de Ti-Pure R700, pigment à base de rutile, vendu par E.I. Dupont. Cette formulation de peinture a une masse volumique de 1,2 kg/l et une teneur en COV (composés organiques volatiles) inférieure à 50,0 g/l. La teneur en solides de la formulation est de 45,4 % en poids ou de 34,6 % en volume, la concentration pigmentaire en volume (CPV) de 15,2, le pH de 8,9, la viscosité de Stormer de 100 KU ± 2 et la viscosité ICI "Cone & Plate" de 0,70 P ± 0.05.

On mesure les caractéristiques suivantes de la présente formulation selon l'invention :

1) le brillant à 60° et à 20° est mesuré à l'aide du test ASTM D-523. Les valeurs obtenues pour le brillant sous les angles de mesure sont respectivement de 86 et 61.

2) La résistance à la coulure est mesurée à l'aide du test ASTM D-4400. La valeur mesurée est de 250 µm.

3) Le nivellement est mesuré à l'aide du test ASTM D-4062, le meilleur résultat étant noté 9. La valeur obtenue pour la formulation selon l'invention est 9.

4) L'adhésion humide sur peinture alkyde brillante est mesurée à l'aide du test ASTM D-3359. L'adhérence est excellente. La valeur mesurée est de 10.

Les données ci-dessus montrent que le film obtenu avec la formulation de peinture selon l'invention, contenant le latex obtenu dans l'exemple 10, présente un brillant, une résistance au blocking (pouvoir anti-bloquant), une adhésion à l'état humide et d'autres propriétés qui, tous, sont excellents. Par rapport aux autres produits que l'on trouve dans le commerce pour des applications analogues, les formulations selon l'invention présentent des performances égales ou supérieures à celles desdits produits commercialisés. De plus, la teneur en COV de la formulation selon l'invention est inférieure à 50 g/l, ce qui constitue un résultat nettement supérieur à celui des formulations du commerce dont la teneur en COV est située généralement entre environ 350 et environ 380 g/l.

Les principes, le mode de réalisation préférentiel et les modes de fonctionnement de la présente invention ont été décrits ci-dessus. Cependant, la présente invention qui est destinée à être protégée ne doit pas être interprétée comme limitée aux formes particulières décrites étant donné que ces dernières doivent être considérées comme une illustration de l'invention et non pas comme une restriction de celle-ci. L'homme du métier peut apporter des variations et des changements sans s'écarter de l'esprit de l'invention.

**Exemple 16**

*Formulation en peinture mate*

On obtient une formulation de peinture blanche mate en dispersant 1500 parties de la composition selon l'exemple 13, 40 parties de Tylose MH 6000 XP, épaississant cellulosique commercialisé par Hoechst, 37 parties de Coatex P 50, dsipersant polyacrylique commercialisé par Coatex, 20 parties de Bevaloid 6681, antimousse commercialisé par Bevaloid, 9 parties de Proxel BD, biocide commercialisé par Zénéca, 530 parties de RL 68, dioxyde de titane commercialisé par Thann et Mulhouse, 2130 parties d'Omyalite 90 et 3200 parties de Durcal 5, carbonates de calcium commercialisé par Omya et 3090 parties d'eau. Cette formule de peinture a un pH (ajustè par une solution de soude à 30%) de 8,5 une concentration pigmentaire en volume de 75 %, un extrait sec massique de 63,4 % et une viscosité Brookfield RVT mesurée à 50tr:min à 23°C à l'aide de la broche 5 de 3480 mPa.s.

La résistance à l'abrasion humide de la présente formulation selon l'invention a été réalisé d'après la norme DIN 53778 et a permis d'obtenir 7200 cycles, ce qui est particulièrement remarquable pour une formule ne contenant pas de solvant.

**Exemple 17**

*Formulation en peinture satinée*

On obtient une formulation de peinture blanche satinée en dispersant 428 parties de la composition selon l'exemple 13, 15 parties de Rhéo 2100, épaississant associatif commercialisé par Coatex, 5 parties de Coatex BR 3, dispersant polyacrylique commercialisé par Coatex, 3 parties de Bevaloid 6002, antimousse commercialisé par Bevaloid, 2 parties de Proxel GXL, biocide commercialisé par Zénéca, 195 parties de RL 68, dioxyde de titane commercialisè par Thann & Mulhouse, 146 parties d'Hydrocarb 90, carbonate de calcium commercialisé par Omya et 202 parties d'eau. Cette formule de peinture présente un pH (ajusté par 5 parties d'une solution de soude de 30%) de 9, une concentration pigmentaire en volume de 33 %, un extrait sec massique de 56,9 % et une viscosité Brookfield RVT mesurée à 50 tr/min à 23°C à l'aide de la broche 5 de 7680 mPa.s, avec une teneur en COV inférieure à 50 g/l.

Différentes caractéristiques ont été mesurées sur cette formulation selon l'invention :

1) Le brillant à 60° après application à 300 μm humide sur plaque de verre et séchage à 23°C et 55 % d'humidité relative pendant 24h a été mesuré à 16.

2) La résistance au blocking, évaluée selon un test consistant à appliquer la peinture sur une feuille de PVC (type Lénétal), à sécher pendant 48h à 23°C et 55% d'humiditè relative, à placer 2 bandelettes face peinte contre face peinte avec un poids de 500g sur une surface de 4 cm² et à évaluer la force nécessaire au décollement sur une échelle de 0 dans le cas où les bandelettes restent collées à 10 quand le décollement est immédiat, a été placée à 10.

Cette performance est donc tout à fait intéressante pour une peinture à très faible taux de COV, les produits traditionnels étant à base soit de polymères trop mous pour atteindre ce comportemant, soit à base de produits durs mais plastifiés à l'aide de solvants.

## Exemple 18

*Formulation en peinture brillante*

On obtient une formulation de peinture blanche brillante en dispersant 570 parties de la composition selon l'exemple 11, 29 parties d'Acrysol RM 2020, épaississant associatif commercialisé par Rohm & Haas, 3 parties de Bevaloid 6770, disperssant polyacrylique commmercialisè par Bevaloid, 1,6 parties de Tegofoamex 1488, antimousse commercialisé par Golsdschmidt, 177 parties de RHD 2, dioxyde de titane commercialisé par Tioxyde, 1 partie de -amino 2-méthyl 1-propanol en solution à 90 % (AMP 90) commercialisè par Angus, 3 parties de Dowanol DPnB, agent de coalescence commercialisé par Dow et 220 parties d'eau. Cette formule de peinture présente une masse volumique de 1,2 kg/dm$^3$ un pH (ajusté par 6 parties d'une solution d'ammoniaque à 20%) de 9, une concentration pigmentaire en volume de 16 %, un extrait sec massique de 46% et une viscosité Brookfield RVT mesurée à 50 tr/min à 23°C à l'aide de la broche 5 de 1200 mPa.s, avec une teneur en COV inférieure à 50g/l.

Différentes caractéristiques ont été mesurées sur cette formulation selon l'invention :

1) Le brillant à 20° après appiication à 300 μm humide sur plaque de verre et séchage à 23°C et 55 % d'humidité relative pendant 24h à été mesuré à 64.

2) La résistance au blocking, évaluée selon un test consistant à appliquer la peinture sur une feuille de PVC (type Lénétal), à sécher pendant 48h à 23°C et 55% d'humidité relative, à placer 2 bandelettes face peinte contre face peinte avec un poids de 500g sur une surface de 4 cm$^2$ et à évaluer la force nécessaire au décollement sur une échelle de 0 dans le cas où les bandelettes restent collées à 10 quand le décollement est immédiat, a été placée à 10.

3) L'évaluation du tendu par la jauge crantée Erichsen a conduit à une valeur de 0,5 mm.

4) L'évaluation des coulures à l'aide de la jauge crantée Erichsen a donné une mesure de 200 μm.

Par ailleurs, le test d'adhésion humide sur vieux fonds alkyles s'est révélé excellent.

Ces performances correspondent à un niveau au moins équivalent à des peintures commerciales aqueuses,mais à un niveau de COV très sensiblement inférieur.

## Exemple 19

*Formulation en peinture industrielle*

Il s'agit d'une peinture blanche destinée à l'industrie en générale, cette peinture peut être appliquée par pulvérisation sur des pièces métalliques en monocouche ou en finition.

On obtient cette formulation de peinture industrielle en dispersant 580 parties de la composition selon l'exemple 12, 29,6 parties d'Acrysol RM 2020, épaississant associatif commercialisé par Rohm & Haas, 3 parties de Bevaloid 6770, dispersant polyacrylique commercialisè par Bevaloid, 1,6 parties de Tegofoamex 1488, antimousse commercialisé par Goldschmidt, 180 parties de RHD 2, dioxyde de titane commercialisé par Tioxyde, 1 partie de 2-amino 2-méthyl 1-propanol en solution à 90 % (AMP 90) commercialisé par Angus, 29 parties de Texanol, agent de coalescence commercialisé par Eastman Chemical, 5 parties d'Inhibition 92, agent anti-flash rust commercialisé par Bourigeaud, 1 partie de Triton GR7M, agent anticratère commercialisé par Union Carbide, et 214 parties d'eau. Cette formule depeinture présente une masse volumique de 1,2 kg/dm$^3$ un pH (ajusté par 6 parties d'une solution d'ammoniaque à 20%) de 9, une concentration pigmentaire en volume de 16%, un extrait sec massique de 43 % et une teneur en COV inférieure à 50 g/l.

L'évaluation de différentes caratéristiques de cette formulation selon l'invention a été réalisée de la façon suivante :

La peinture a été appliquée sur des plaques d'acier LAF dégraissées d'épaisseur 0,8 mm avec une tige filetés de 100 mm humide afin d'obtenir une épaisseur sèche de 25 mm. Les plaques ainsi revêtues sont séchées 30 minutes à 60°C puis conditionnées 48h à 21°C et 60% d'humidité relative.

1) La résistance chimique aux solvants a été évaluée selon un test consistant à frotter la plaque revêtue avec un tampon de coton ombidé de solvant. Un poids de 500 g est appliqué sur le tampon et on évalué l'état du film après 100 va et vient du tampon (à une vitesse de 62 va et vient par minute).

Le test a été effectué avec comme solvant l'éthanol et la Méthyl Ethyl Cétone. Dans les deux cas après 100 va et vient, le support, n'apparaît pas et le film ne semble pas dégradé.

2) La résistance au choc de cette peinture a été évaluée par chute de masse selon la méthode NF T 30-039. La peinture selon l'invention a permis d'obtenir une résistance au choc supérieure à 100 cm avec une masse de 1 kg, ce qui traduit une remarquable souplesse du film.

Ces performances correspondant à un niveau équivalent à des peintures commerciales solvantées, mais à unniveau de COV très sensiblement inférieur.

Par ailleurs d'excellent résultats (pour les tests décrits ci-dessus) ont également été obtenus en séchant les films de peinture selon l'invention à des températures inférieures ou supérieures à 60°C.

## Revendications

1. Composition aqueuse de revêtement à base de latex polymère, caractérisée en ce que le polymère dérive des monomères suivants :
   (a) acétoacétoxyéthyl acrylate ou acétoacétoxyéthyl méthacrylate ;
   (b) glycidyl acrylate ou glycidyl méthacrylate ;
   (c) un ou plusieurs acide(s) polymérisables à insaturation éthylénique et
   (d) un ou plusieurs monomères copolymérisables avec les précédents ;
   et dans lequel le pourcentage total en poids de (a), (b) et (c) dans la composition polymère est compris entre environ 2 % en poids et environ 60% en poids par rapport à la quantité totale de solides contenus dans l'émulsion aqueuse et dans lequel le pourcentage total en poids de (d) dans la composition polymère est comprise entre environ 97 % en poids et environ 40 % en poids par rapport à la quantité totale de solides polymères contenus dans l'émulsion aqueuse.

2. Composition aqueuse de revêtement selon la revendication 1, caractérisée en ce que ledit latex a un pH compris entre environ 6,5 et environ 10.

3. Composition aqueuse de revêtement selon la revendication 1, caractérisée en ce que le monomère (c) dérive d'un monomère acide à base acrylique.

4. Composition aqueuse de revêtement selon la revendication 3, caractérisée en ce que le monomère (c) est choisi dans le groupe comprenant l'acide acrylique, l'acide méthacrylique et leurs mélanges.

5. Composition aqueuse de revêtement selon la revendication 1, caractérisée en ce que au moins un des monomères (d) dérive d'un ester acrylique.

6. Composition aqueuse de revêtement selon la revendication 5, caractérisée en ce que au moins un des monomères (d) comporte un alkyl acrylate ou un alkyl méthacrylate dans lequel le groupe alkyle contient entre environ 1 et environ 8 atomes de carbone.

7. Composition aqueuse de revêtement selon la revendication 6, caractérisée en ce que au moins un des monomères (d) est choisi dans le groupe comprenant l'acrylate d'éthyle, le méthacrylate de méthyle, l' acrylate de butyle et leurs mélanges.

8. Composition aqueuse de revêtement selon la revendication 1, caractérisée en ce que au moins un des monomères (d) dérive de monomères aromatiques ou aliphatiques vinyliques.

9. Composition aqueuse de revêtement selon la revendication 8, caractérisée en ce que au moins un des monomères (d) contient du styrène.

10. Composition aqueuse de revêtement selon l'une quelconque des revendications 1 à 9, caractérisée en ce que jusqu'à 80 % en poids, de préférence jussqu'à 50 % en poids dudit latex est remplacé par un autre liant choisi parmi les latex acrylate, styréne/acrylate et copolymères acétates, les dispersion aqueuses de polyuréthanne, de polyester, d'époxy, d'alkydes telles résines polyuréthannes, époxy et alkydes.

11. Composition aqueuse de revêtement selon la revendication 1, caractérisée en ce que :
    (a) comprend l'acétoacétoxyéthyl méthacrylate ;
    (b) comprend le glycidyl méthacrylate ;
    (c) comprend un mélange d'acide acrylique et d'acide méthacylique ;
    (d) comprend un mélange d'éthylèneglycol diméthacrylate, de styrène, d'acrylate de butyle, de méthacrylate de méthyle et d'acrylate d'éthyle.

12. Composition aqueuse de revêtement selon la revendication 2, caractérisé en ce que le pH dudit latex est ajusté à l'aide d'une base hydrosoluble choisie dans le groupe comportant l'ammoniac, hydroxyde de sodium, un hydroxyde d'ammonium quaternaire et leurs mélanges.

13. Composition aqueuse de revêtement selon la revenaication 12, caractérisé en ce que ladite base comprend l'hydroxyde de tétraméthylammonium.

14. Composition aqueuse de revêtement selon la revendication 1, caractérisé en ce que ladite composition comprend un ou plusieurs additifs choisis dans le groupe comportant des épaississants, antimousses, agents modifiants, agents de coalescence, dispersants, pigments, colorants, surfactants, tensio-actifs, agents anti-blockants et leurs mélanges.

15. Procédé de revêtement de surfaces comportant l'étape de l'application d'une peinture à l'eau contenant une composition à base de latex polymère telle que définie à l'une quelconque des revendications 1 à 14.

16. Pocédé selon la revendication 15 dans lequel la réticulation se fait à des températures comprises entre environ 5°C et environ 40°C.

17. Procédé selon la revendication 16 dans lequel ladite réticulation demande de 12 à 48 heures environ.

18. Procédé selon la revendication 17, caractérisé en ce que la surface traitée est choisie dans le groupe comprenant les cloisons sèches, le bois, les lambris, le métal, le béton, les surfaces en matières plastiques et le verre.

19. Composition de peinture à l'eau comprenant une composition aqueuse à base de latex polymère telle que définie à l'une quelconque des revendications 1 à 14.

20. Utilisation d'une composition aqueuse de revêtement telle que définie à l'une quelconque des revendications 1 à 14 pour préparer des colles, des adhésifs sensibles à la pression, des vernis de surimpressions de des compositions de peinture industrielle.